## Europäisches Patentamt
## European Patent Office
## Office européen des brevets

(19)

(11) Publication number : **0 353 006 B1**

## EUROPEAN PATENT SPECIFICATION

(12)

(45) Date of publication of patent specification : **07.01.93 Bulletin 93/01**

(51) Int. Cl.⁵ : **B60C 7/12**

(21) Application number : **89307509.3**

(22) Date of filing : **24.07.89**

(54) A non-pneumatic tyre.

(30) Priority : **27.07.88 JP 188991/88**

(43) Date of publication of application : **31.01.90 Bulletin 90/05**

(45) Publication of the grant of the patent : **07.01.93 Bulletin 93/01**

(84) Designated Contracting States : **DE FR GB**

(56) References cited :
**EP-A- 0 159 888**
**FR-A- 2 534 191**
**US-A- 4 226 273**
**RESEARCH DISCLOSURE, vol. 165, January 1978, pages 47,48, no. 16536, Havant, GB;**
**"Non pneumatic structurally resilientinte-grated wheel-tire"**

(73) Proprietor : **SUMITOMO RUBBER INDUSTRIES, LTD.**
**No. 1-1, Tsutsui-cho 1-chome**
**Chuo-ku Kobe-shi Hyogo-ken 651 (JP)**

(72) Inventor : **Nakasaki, Eiji**
**629 Kimura Kakogawa-cho**
**Kakogawa-shi Hyogo-ken (JP)**

(74) Representative : **Stewart, Charles Geoffrey**
**SP TYRES UK LIMITED Tyre Technical Division**
**Fort Dunlop Birmingham B24 9QT (GB)**

Jouve, 18, rue Saint-Denis, 75001 PARIS

## Description

The present invention relates to a non-pneumatic tyre, and more particularly to a non-pneumatic spare tyre for emergency use.

In general, vehicles are provided with a spare tyre for emergency use which replaces a flat or defective large or main tyre. To increase the capacity of the trunk, a high pressure tyre which is narrower in width than the main tyre, or a folding type tyre which is deflated when stored but inflated for use, have been proposed and have had limited use. The most used is the high pressure narrow tyre because the folding type tyre is inconvenient to inflate before use.

In the high pressure narrow tyre, however, its high inner air pressure is apt to be lost due to long storage and accordingly, a periodical inspection is required, which is also inconvenient.

Therefore, there is a requirement for an easy spare tyre that does not need any periodical air-pressure inspection or inflation before use.

Furthermore it is also required for spare tyres to be of reduced weight in order to improve dynamic performance of the vehicle such as fuel efficiency.

The document Research Disclosure, Vol 165, January 1978, pages 47-48, No. 16536 discloses a non-pneumatic tyre having a main body comprising a disc portion for attaching to a vehicle, an annular portion disposed around the disc portion, and a tread disposed on the radially outer surface of the annular portion wherein the disc and the annular portions are moulded from an elastic material as a single body.

In Japanese patent application laid-open No. 62-295704, a non-pneumatic tyre is proposed, which tyre comprises an annular body composed of an inner cylindrical member, an outer cylindrical member, and ribs connecting the outer member to the inner member; and a rubber tread provided on the outer surface of the annular body. The above-mentioned annular body is disclosed as made separately from a wheel disc and thereafter assembled top it. Further, in order to reduce noise and vibration when running, the tread is essentially provided with grooves inclined so that the axially inner end is positioned more closely to the corresponding rib than the axially outer end in the circumferential direction.

On the other hand, since spare tyres are designed to survive only temporary use, the spare tyre when used must be replaced with a normal main tyre as soon as possible.

Therefore, when the spare tyre according to the prior art which produces very low noise and no special vibration is used, the driver often tends to delay replacing the spare tyre with a normal main tyre. Thus the time of use of the spare tyre tends to become undesirably long, which leads to a dangerous condition which may cause a secondary failure or accident.

It is, therefore, an object, of the present invention to provide a non-pneumatic spare tyre, in which noise and vibration are generated at rather high levels to disturb the driver and thereby to remind him of the spare tyre being in use which must be replaced with a main tyre, and in which the spare tyre weight and production costs are reduced.

According to the present invention, a non-pneumatic tyre comprises a main body (4) comprising a disc portion (2) for mounting to a vehicle, an annular portion (3) disposed around said disc portion (2) and a tread (5) disposed on the radially outer surface of said annular portion, said disc portion (2) and said annular portion (3) moulded from an elastic material as a single body characterised in that the annular portion (3) comprises an inner cylindrical member (13) connected to the outer edge of the disc portion (2), an outer cylindrical member (14) disposed outside the inner cylindrical member (13), and a plurality of rib members (15) extending between said liner and outer cylindrical members (13 and 14) to connect them to each other, and said rib members (15) are circumferentially spaced apart from one another.

Embodiments of the present invention will now be described in detail referring to the drawings, in which:

Figure 1 is a side view showing an embodiment of the present invention;

Figure 2 is a cross sectional view thereof,

Figure 3 is a partial front view showing a tread pattern;

Figure 4 is a partial plan view showing the annular portion;

Figure 5 is a sectional view of the annular portion;

Figure 6 is a perspective view showing a part of the main body of the tyre;

Figure 7 is a sectional view showing a part of the disc portion thereof, and

Figure 8 is a partial; cross sectional view showing another embodiment of the present invention.

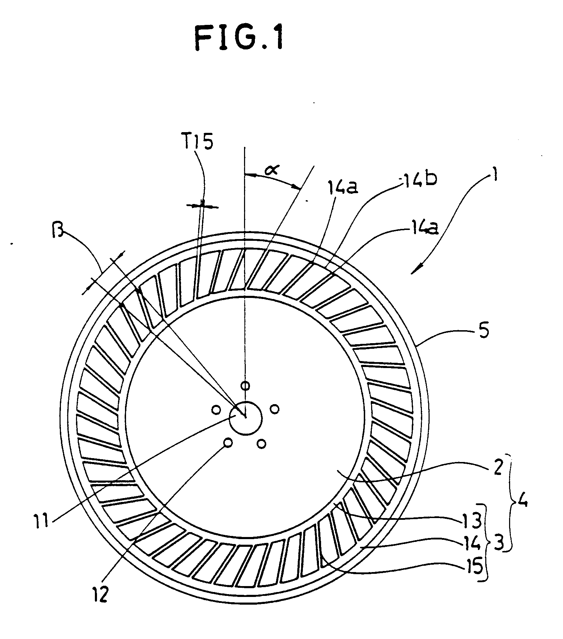

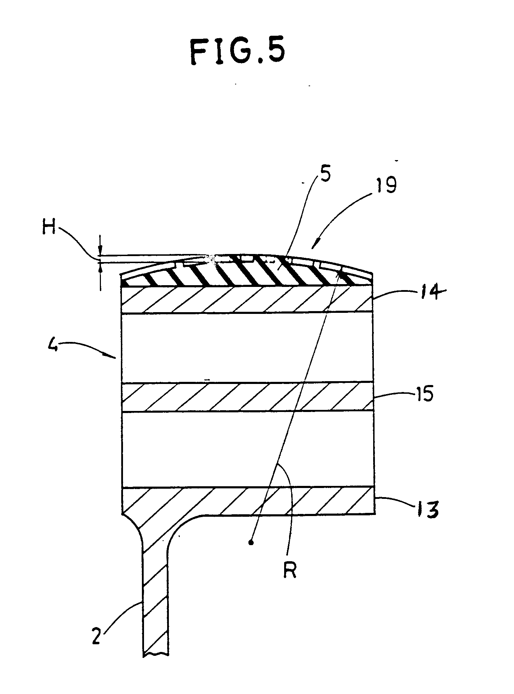

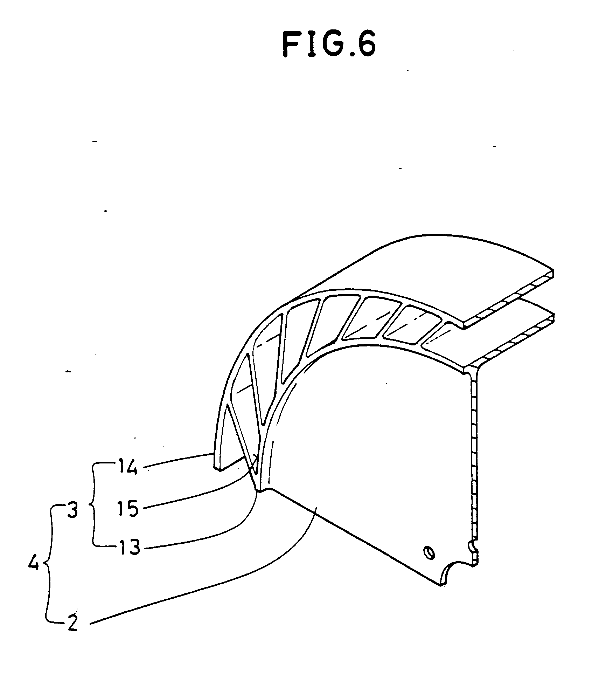

In Figures 1 to 7 showing a non-pneumatic tyre 1 according to the present invention, a main body 4 which comprises a disc portion 2 and an annular portion 3, is formed from an elastic material, and a tread 5 is disposed around and on the outer surface of the annular portion 3.

The disc portion 2 is a circular plate provided with a through hole 11 in the centre thereof and a plurality of mounting bolt holes 12 therearound to mount the disc portion 2 on a vehicle axle when required.

The annular portion 3 comprises an inner cylindrical member 13 and an outer cylindrical member 14 each of which is a thin cylindrical ring body having substantially identical widths. The inner cylindrical member 13 is disposed around the disc portion 2, and the inner surface of the member 13 is fixed to the outer edge of the disc portion 2.

The outer cylindrical member 14 of a larger diamter is disposed radially outside the inner cylindrical member 13, and the outer cylindrical member 14 is coaxially connected to the inner cylindrical member 13 by means of a plurality of rib members 15. The rib members 15 are arranged at regular spaced-apart pitches in the circumferential direction and are each at a bias angle (alpha) with respect to the radial direction.

The tread 5 is made of a rubber compound and is fixed to a periphery of the annular portion 3, that is, that of the outer cylindrical member 14.

Based on the diameter of the tyre main body 4, that is, the diameter D14 of the outer cylindrical member 14, the thicknesses T13 and T14 of the inner and outer cylindrical members 13 and 14 respectively, are determined as follows:

The ratio T13/D14 and the ratio T14/D14 are more than 0.03 and less than 0.1, and preferably more than 0.05 and less than 0.075. When the ratio is more than 0.1, the effect on the weight reduction becomes less and it becomes too heavy. On the contrary, when the ratio is less than 0.03, the durability is deteriorated.

Incidentally, the thickness T13 can be set to be same as or different from the thickness T14.

On the other hand, the ratio D13/D14 of the diameter D13 of the inner cylindrical member 13 to the diameter D14 of the outer cylindrical member 14 is set to be more than 0.55 and less than 0.8, and more preferably more than 0.65 and less than 0.75, whereby the rib members 15 can effectively smooth or spring by their deformations, the force variation which is transferred to the disc portion 2 through the inner cylindrical member 13 and rib members 15 from the outer cylindrical member 14 when contacting the ground. It is thus possible to absorb the shocks of running on a rough road. When the ratio D13/D14 is over 0.8, the deformation is apt to reach the disc portion 2 beyond the inner cylindrical member 13.

When it is less than 0.5, the deflection of the rib members 15 with load increases and the eccentricity of the outer cylindrical member 14 becomes too large.

Each of the rib members 15 is a flat rectangular plate having an outer side and inner side extending between one edge (a) and the outer edge (b) of the cylindrical members parallel to the tyre axis, and it is inclined at an angle (alpha) with respect to a radial plane which intersects therewith at the above-mentioned inner side.

The angle (alpha) is between 10 to 70 degrees, and more preferably 30 to 60 degrees. When the angle (alpha) is less than 10 degrees, the bending rigidity of the rib members in the radial direction is increased, which also increases the rigidity of the outer cylindrical member 14 and worsens the shock absorbing or spring performance. On the contrary, when it is over 70 degrees, the deflection under load becomes excessively large.

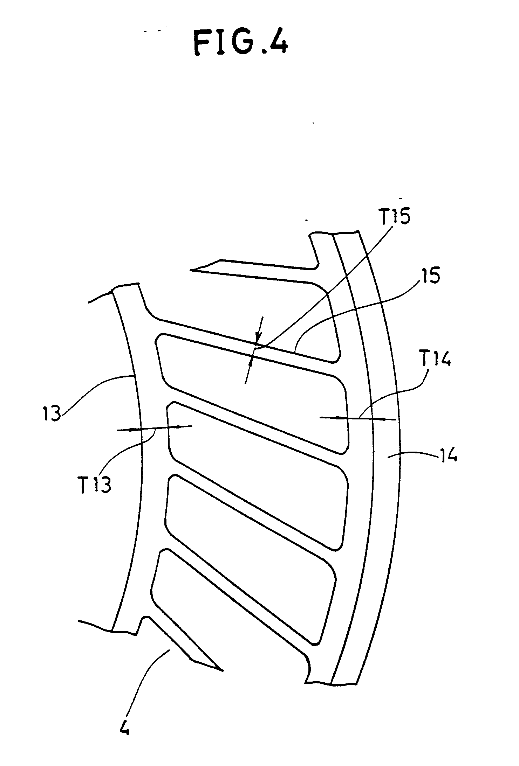

The intersecting portions between the surfaces of each rib member 15 and the outer surface of the inner cylindrical member 13 and the inner surface of the outer cylindrical member 14 are curved as shown in Figure 4.

The thickness T15 of the rib members is determined in consideration of the above-mentioned inclination angle (alpha) and their circumferential pitch or spacing angle (beta), but generally the ratio T15/T14 of the thickness T15 to the above-mentioned thickness T14 of the outer cylindrical member 14 is set to be less than 1.0 and more than 0.3, whereby the rib members can absorb movement and deformation of the outer annular member 14 when contacting with the ground and resist the excess or shock load when running over a bump.

The pitch angle (beta) is set to be in the range between 5 and 20 degrees, and more preferably between 8 and 12 degrees, so that the ability to absorb deformations when contacting the ground and running over bumps and the ability to endure the load are obtained in good balance.

The pitch angle (beta) is constant for all the rib member 15. Accordingly, the outer cylindrical member 14 is alternately supported by an on-rib part 14a which is backed by a rib member 15 and thus has a high bending rigidity and off-rib part 14b therebetween having a low bending rigidity. This results in noise and vibrations which are generated when running and which are magnified in a resonance phenomenon.

As above described, the annular portion 3 has the inclined rib members 15 connecting coaxially the inner and the outer cylindrical members 13 and 14 with each other, thereby transferring deformation of the outer cylindrical member 14 when contacting the ground to the inner cylindrical member 13 while effectively absorbing, and also transferring the tyre load from the vehicle axle to the outer cylindrical member through the disc portion 2 and the inner cylindrical member 13.

The disc portion 2 is positioned in the axial direction to one side (a) of the inner cylindrical member 13 to make the necessary space for brake, brake disc and the like.

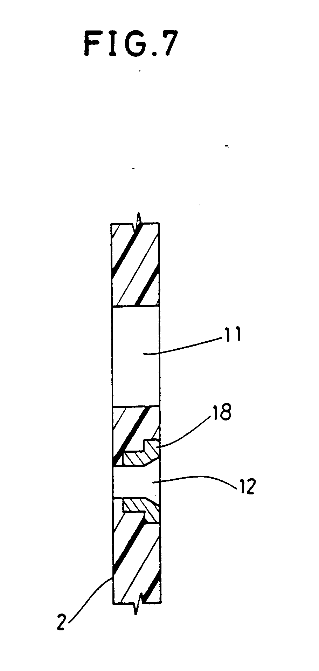

Each of the mounting bolt holes 12 is reinforced by a metal ring 18 surrounding the bolt hole, as shown in Figure 7, and each reinforcing ring 18 is inserted in a stepped hole and fixed thereto. The disc portion 2 is mounted on a vehicle by bolts through these holes 12. These are conveniently the main wheel bolts.

Further, the thickness T2 of the disc portion 2 is substantially the same as the thickness T14 of the outer cylindrical member 14.

The annular portion 3 and the disc portion 2 of the tyre main body 4 are moulded from an elastic material as a single body so that vibrations in the annular portion 3 are easily transferred to the disc portion 2, which maximises the vibration and noise in the vehicle, and also reduces the tyre assembly cost. For that purpose, various moulding methods, such as injection moulding, compression moulding, casting and the like can be adopted, and in particular injection moulding is particularly suitable.

In the injection moulding, a thermo-plastic resin is employed as the above-mentioned elastic material, but more preferably, a reinforced complex resin, such as an industrial thermo-plastic resin reinforced by chopped fibres.

Further, this reinforced complex resin preferably has the following physical properties when measured in the form of a test piece:

(a) The Vicat softening temperature is more than 160 degrees C to reduce thermal deformation due to heat generated by use of the tyre and the heat of braking of the vehicle.

(b) The bending elastic modulus is more than 110,000 kgf/sq.cm to prevent excessive deformation due to the ground contacting stress (pressure).

(c) The bending strength is more than 500 kgf/sq.cm to prevent damage or breakage in use.

(d) The izod impulse strength (with notch) is more than 5 kg-cm/cm to endure the shock produced by roughness of a road surface.

(e) The water absorption rate is preferably less than 1.2% to prevent deformation due to moisture.

Based on the above physical properties, the above-mentioned dimensions of the members and portions are determined.

Examples of such above-mentioned industrial resins having the necessary strength, impulse-strength and resistance to fatigue are polyurethane resin, polyester resin, nylon, polycarbonate resin and the like.

Further, for the chopped fibres, glass fibres, metallic fibres, carbon fibres, aromatic polyamide fibres and the like are best used and the diameter thereof is preferably more than 0.1 and less than 100 microns, and more preferably more than 1.0 and less than 50 microns, whereby economical efficiency and resistance to impulse are well balanced.

Further, the chopped fibres mixed with the resin should have for at least half the volume of the fibres fibres having an aspect ratio (diameter/length ratio) which is more than 70 and more preferably more than 100, whereby the reinforcement is enhanced.

The amount of chopped fine fibres included is preferably more than 10% and less than 75%, and more preferably more than 20% and less than 60% by weight, so that a good reinforcing effect and good mouldability of the reinforced resin are both obtained simultaneously.

The tread 5 is made of a rubber compound having a JIS A hardness of more than 50, whereby the resistance to wear is increased and the level of noise and vibration when running is also increased to satisfactory level.

The tread 5 can be moulded directly on the outer surface of the tyre main body 4 by using an injection moulding method. Alternatively the tread 5 can be formed by a vulcanised rubber band or ring fixed around the tyre main body 4 after it is made.

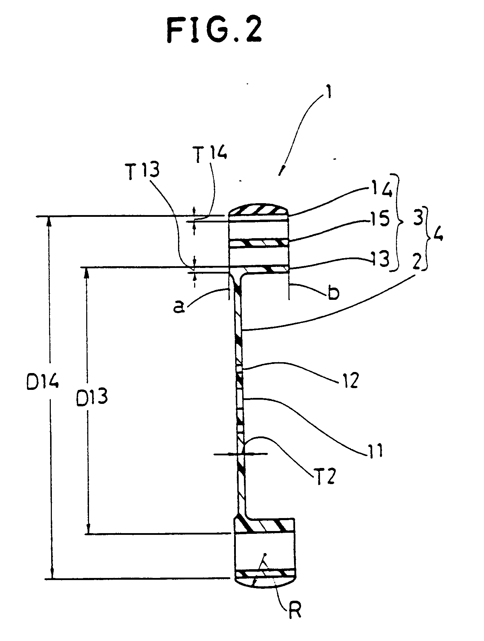

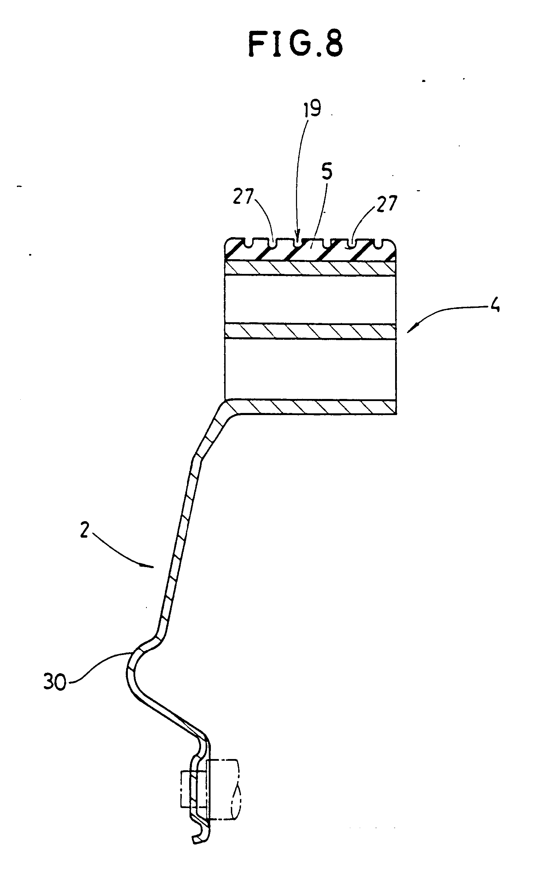

In a cross-section including the tyre axis, the surface of the tread 5 is preferably provided with a curvature as shown in Figure 2, and the radius R thereof is more than 150 mm. However, the surface can also be formed flat as shown in Figure 8 which shows another embodiment of the present invention. In the latter case, the tread contacts the ground in the shoulder regions as well as the crown region, which increases the cornering force available from the tyre.

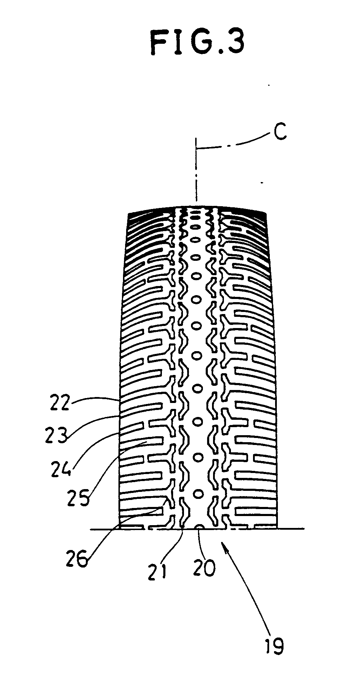

As shown in Figure 3, the tread 5 is provided with a tread pattern 19. In this embodiment, the tread pattern consists of circumferentially discontinuous grooves. One such arrangement is a series of circular holes or apertures 20 disposed on the tyre equator spaced apart at regular pitches in order to increase vibration during running.

Further, additional discontinuous grooves which are bent grooves 21 are arranged one between each adjacent circular hole 20 to form two rows one on each side of the tyre equator. Furthermore, on each side of the tyre equator, axially extending lateral grooves 22, 23, 24, 25 and 26 are provided. Each of the lateral grooves 22 and 24 is provided in the axially inner side thereof with a bent groove portion 26, which portion extends between the bent grooves 21 and is curved oppositely to the lateral grooves ends.

Accordingly, because the tread pattern comprises the circumferentially discontinuous grooves 20 to 26, periodical vibrations are generated to highten the noise level.

For the tread life of the tyre, the groove depth H of the discontinuous grooves is set to be in a range of 1/2 to 1/3 times the groove depth of the main tyres in order to maximise the rubber thickness provided in the tread 5. Thus vibration from the ground surface is more efficiently transferred to the tyre main body 4.

In order to further increase the amplitude of vibrations, the ratio SG/S of the grooved area SG to the total area S of the ground contacting face of the tread is set to be more than 0.4.

Figure 8 shows another embodiment of the present invention, in which the disc portion 2 is provided with a curvature 30 to form a dish. Also the outer surface of the tread 5 is flat and is provided with a pattern 19 comprising circumferentially extending grooves 27.

As examples spare tyres equivalent to 195/80R 15 tyres were made in two types 1 and 2 in accordance with the specifications given in Tables 1 and 2. Each test tyre was mounted on the front right wheel of a 1500 cc FF passenger car, and durability tests and a noise test were conducted.

It was confirmed that both the test tyres had a wear life more than 3500 km and an endurance of more than 800 times for a figure of eight test. Further, it was confirmed that the vibrations and noise when running at more than 50 km/h were raised to a high level which was quite unacceptable to the driver who therefore would not escape the fact that a special tyre was in use.

As described above, in the non-pneumatic spare tyres according to the present invention, the tyre main body comprising an annular portion and a disc portion to be mounted on a vehicle axle is moulded as a single body from an elastic material.

Accordingly, in comparison with the prior art tyre in which the disc portion is formed separately from the annular portion, a weight reduction and cost reduction can be achieved. Further, the tyre generates vibration and noise at an unacceptably high level, warning the driver to replace the spare tyre with a normal tyre early. Therefore, danger due to long use of the spare tyre can be avoided.

### TABLE 1

|  |  | Ex. 1 | Ex. 2 |
|---|---|---|---|
|  |  | Figs. 1-7 | Fig. 8 |
| Tire Main Body | | | |
| D14 | (mm) | 560 | 560 |
| T14 | (mm) | 10 | 10 |
| W | (mm) | 100 | 100 |
| D13 | (mm) | 400 | 400 |
| T13 | (mm) | 10 | 10 |
| T15 | (mm) | 7 | 5 |
| Beta | (deg) | 9 | 8 |
| Alfa | (deg) | 30 | 30 |
| T2 | (mm) | 10 | 10 |
| Tread | | | |
| R | (mm) | 180 | Flat |
| T5 | (mm) | 15 | 10 |
| Tread Pattern | | | |
| SG/S | (%) | 50 | 70 |

```
TABLE  2
------------------------------------------------------
                              Ex. 1           Ex. 2
------------------------------------------------------
Tire Main Body
  Base material            polyester       polyester
  Fiber material           grass           grass
    Weight %               10              10
    Diameter               12 micron       10 micron
    Length                 3  mm           1  mm
Tread
  Base material            SBR/NR          SBR/NR
  JIS hardness             60              60
------------------------------------------------------
```

**Claims**

1.  A non pneumatic tyre having a main body (4) comprising a disc portion (2) for mounting to a vehicle, an annular portion (3) disposed around said disc portion (2); and a tread (5) disposed on the radially outer surface of said annular portion, said disc portion (2) and said annular portion (3) moulded from an elastic material as single body characterised in that the annular portion (3) comprises an inner cylindrical member (13) connected to the outer edge of the disc portion (2), an outer cyclindrical member (14) disposed outside the inner cylindrical member (13), and a plurality of rib members (15) extending between said inner and outer cylindrical members (13 and 14) to connect them to each other, and said rib members (15) rate circumferentially spaced apart from one another.

2.  A non-pneumatic tyre according to claim 1 characterised in that the rib members (15) are circumferentially spaced apart at regular intervals.

3.  A non pneumatic tyre according to claims 1 or 2 characterised in that the elastic material is a complex resin material reinforced with chopped fine fibres mixed with a synthetic resin as its base.

4.  A non-pneumatic tyre according to claim 3 characterised in that the diameter of the chopped fine fibres is 0.1 to 100 microns, the total amount of the chopped fibres mixed with the resin base is 10 to 75 parts by weight, and the chopped fibres include at least half volume of fibres of which the aspect ratio (diameter/length ratio) is more than 70.

5.  A non pneumatic tyre according to claim 3 or 4 characterised in that the said complex resin material has the following physical properties: the Vicat softening temperature is more than 160 degrees; the bending elastic modulus is more than 110,000 kgf/sq.cm; the bending strength is more than 500 Kgf/sq cm; and the izod impulse strength(with notch) is more than 5 Kg-cm/cm.

6.  A non pneumatic tyre according to any one of claims 1 to 5 characterised in that the tread (5) is made of rubber having a JIS A hardness more than 50.

7.  A non pneumatic tyre according to any one of claims 1 to 6 characterised in that the outer surface of the tread (5) is provided in cross section with a curvature, and the radius thereof is more than 150 mm.

8.  A non pneumatic tyre according to any one of claims 1 to 7 characterised in that the tread (5) is provided with at least circumferentially discontinuous  grooves in the centre region thereof.

9.  A non pneumatic tyre according to claim 8 characterised in that the ratio SG/S of the grooved area SG to the total area S of the tread surface is more than 0. 4.

**Patentansprüche**

1. Nicht-pneumatischer Reifen mit einem Hauptkörper (4), der umfaßt einen Scheibenabschnitt (2) zum Anbringen an einem Fahrzeug, einen um den Scheibenabschnitt (2) angeordneten Ringabschnitt (3) und einen an der radial äußeren Fläche des Ringabschnitts angeordneten Laufstreifen (5), wobei der Scheibenabschnitt (2) und der Ringabschnitt (3) aus einem elastischen Material als ein Körper geformt sind, dadurch gekennzeichnet, daß der Ringabschnitt (3) umfaßt einen inneren zylindrischen Teil (13), der mit der äußeren Kante des Scheibenabschnitts (2) verbunden ist, einen äußeren zylindrischen Teil (14), der außerhalb des inneren zylindrischen Teils (13) angeordnet ist und eine Vielzahl von Rippenteilen (15), die sich zwischen dem inneren und dem äußeren zylindrischen Teil (13 und 14) erstrekken, um diese miteinander zu verbinden, und die Rippenteile (15) in Umfangsrichtung mit Abstand voneinander angeordnet sind.

2. Nicht-pneumatischer Reifen nach Anspruch 1, dadurch gekennzeichnet, daß die Rippenteile (15) in Umfangsrichtung regelmäßige Intervall-Abstände aufweisen.

3. Nicht-pneumatischer Reifen nach den Ansprüchen 1 und 2, dadurch gekennzeichnet, daß das elastische Material ein komplexes Harzmaterial ist, das mit gehackten feinen Fasern verstärkt ist, die mit synthetischem Harz als Grundmaterial gemischt sind.

4. Nicht-pneumatischer Reifen nach Anspruch 3, dadurch gekennzeichnet, daß der Durchmesser der gehackten feinen Fasern 0,1 bis 100 μm beträgt, die Gesamtmenge der gehackten Fasern, die mit dem Harzgrundmaterial gemischt sind, 10 bis 75 Gew.-Teile beträgt und die gehackten Fasern mindestens ein halbes Volumen Fasern enthalten, von denen das Ansichtsverhältnis (Durchmesser/Längen-Verhältnis) größer als 70 ist.

5. Nicht-pneumatischer Reifen nach Anspruch 3 oder 4, dadurch gekennzeichnet, daß das Komplexharzmaterial folgende physikalische Eigenschaften besitzt: die Vicat-Erweichungstemperatur beträgt mehr als 160 Grad;
   der Biegeelastizitätsmodul beträgt mehr als 110 000 kp/cm$^2$,
   die Biegefestigkeit beträgt mehr als 500 kp/cm$^2$, und
   die Izod-Impulsfestigkeit (mit Kerbe) ist größer als 5 kg-cm/cm.

6. Nicht-pneumatischer Reifen nach einem der Ansprüche 1 bis 5, dadurch gekennzeichnet, daß der Laufstreifen (5) aus Gummit mit einer JIS-A-Härte von mehr als 50 hergetellt ist.

7. Nicht-pneumatischer Reifen nach einem der Ansprüche 1 bis 6, dadurch gekennzeichnet, daß die Außenfläche des Laufstreifens (5) im Querschnitt mit einer Krümmung versehen ist, und deren Radius mehr als 150 mm beträgt.

8. Nicht-pneumatischer Reifen nach einem der Ansprüche 1 bis 7, dadurch gekennzeichnet, daß der Laufstreifen (5) in seinem ganzen Bereich mit zumindest in Umfangsrichtung diskontinuierlichen Nuten versehen ist.

9. Nicht-pneumatischer Reifen nach Anspruch 8, dadurch gekennzeichnet, daß das Verhältnis SG/S der genuteten Fläche SG zur Gesamtfläche S der Laufstreifenoberfläche mehr als 0,4 ist.

**Revendications**

1. Bandage non pneumatique, ayant un corps principal (4) qui comprend une partie de disque (2) destinée à être montée sur un véhicule, une partie annulaire (3) disposée autour de la partie de disque (2), et une bande de roulement (5) disposée à la surface radialement externe de la partie annulaire, la partie de disque (2) et la partie annulaire (3) étant moulées en un matériau élastique sous forme d'un corps unique, caractérisé en ce que la partie annulaire (3) comporte un organe cylindrique interne (13) raccordé au bord externe de la partie de disque (2), l'organe cylindrique externe (14) étant disposé à l'extérieur de l'organe cylindrique interne (13), et plusieurs nervures (15) disposées entre les organes cylindriques interne et externe (13 et 14) afin que ceux-ci soient raccordés, et les nervures (15) sont espacées circonférentiellement les unes des autres.

**2.** Bandage non pneumatique selon la revendication 1, caractérisé en ce que les nervures (15) sont espacées circonférentiellement à intervalles réguliers.

**3.** Bandage non pneumatique selon la revendication 1 ou 2, caractérisé en ce que le matériau élastique est un matériau à base d'une résine complexe renforcée par de fines fibres coupées mélangées à une résine synthétique de base.

**4.** Bandage non pneumatique selon la revendication 3, caractérisé en ce que les diamètres des fines fibres coupées est compris entre 0,1 et 100 μm, la quantité totale des fibres coupées mélangées à la résine de base est comprise entre 10 et 75 parties en poids, et les fibres coupées comprennent pour la moitié au moins de leur volume des fibres dont le rapport d'allongement (rapport diamètre/longueur) dépasse 70.

**5.** Bandage non pneumatique selon la revendication 3 ou 4, caractérisé en ce que le matériau de résine complexe a les propriétés physiques suivantes :
la température de ramollissement Vicat dépasse 160°,
le module élastique de flexion dépasse 110 000 kg/cm$^2$,
la résistance à la flexion dépasse 500 kg/cm$^2$, et
la résistance impulsionnelle Izod (avec entaille) dépasse 5 kg.cm/cm.

**6.** Bandage non pneumatique selon l'une quelconque des revendications 1 à 5, caractérisé en ce que la bande de roulement (5) est formée de caoutchouc dont la dureté JIS A dépasse 50.

**7.** Bandage non pneumatique selon l'une quelconque des revendications 1 à 6, caractérisé en ce que la surface externe de la bande de roulement (5) a, en coupe, une courbure dont le rayon dépasse 150 mm.

**8.** Bandage non pneumatique selon l'une quelconque des revendications 1 à 7, caractérisé en ce que la bande de roulement (5) a au moins des gorges discontinues circonférentiellement dans sa région centrale.

**9.** Bandage non pneumatique selon la revendication 8, caractérisé en ce que le rapport SG/S de la surface des gorges SG à la surface totale S de la bande de roulement dépasse 0,4.

EP 0 353 006 B1

# FIG.1

# FIG.2

# FIG.3

# FIG.4

# FIG.5

# FIG.6

# FIG.7

# FIG.8